# EUROPÄISCHE PATENTSCHRIFT

(11) **EP 0 489 957 B1**
(45) Veröffentlichungstag und Bekanntmachung des Hinweises auf die Patenterteilung: **07.07.1993**
(21) Anmeldenummer: 90123944.2
(22) Anmeldetag: 12.12.1990
(51) Int. Cl.: B62D 15/02, G01D 5/14

(54) **Schaltungsanordnung zum Erfassen des Einschlagwinkels von Hinterrädern eines Kraftfahrzeugs**
Circuit for measuring the steering position of the rear wheels of a motorcar
Circuit de capteur d'angle de direction des roues orientables arrières d'un véhicule automobile

(43) Veröffentlichungstag der Anmeldung: 17.06.1992
(73) Patentinhaber: SIEMENS AKTIENGESELLSCHAFT, 80333 München (DE)
(72) Erfinder: Diekert, Thomas, Dipl.-Ing. (FH), W-8400 Regensburg (DE)

(56) Entgegenhaltungen:
- DE-A- 3 325 400
- DE-A- 3 634 051
- DE-A- 3 739 613
- US-A- 4 156 130
- PATENT ABSTRACTS OF JAPAN vol. 8, no. 76 (M-288)(1513) 09 April 1984, & JP-A-58 221771 (NISSAN) 23 Dezember 1983,

## Beschreibung

Die Erfindung betrifft eine Schaltungsanordnung gemäß Oberbegriff von Patentanspruch 1.

In der DE-OS 39 08 164 wird ein Steuerungssystem für die Hinterradlenkung eines Kraftfahrzeugs beschrieben, bei der ein Antriebsmotor einen Stellkolben verschiebt, der mechanisch mit den Hinterrädern gekoppelt ist und zum Lenken der Hinterräder dient. Zum Erfassen der Verschiebung des Stellkolbens dient ein Potentiometer. Der Sollwert für den Einschlagwinkel der Hinterräder ist abhängig von dem Einschlagwinkel der Vorderräder unter Berücksichtigung der Fahrgeschwindigkeit. Eine Lenkung der Hinterräder erfolgt nur dann, wenn die Signale von Sensoren zur Erfassung des Einschlagwinkels der Vorderräder und des Lenkrades, sowie von Sensoren zur Erfassung der Fahrgeschwindigkeit sich im wesentlichen entsprechen. Es müssen mehrere Informationen von Sensoren ausgewertet und miteinander verglichen werden.

Wenn die Hinterräder gelenkt werden, ist es wichtig den Einschlagwinkel aber schnell und fehlerfrei zu erfassen, da es sonst zu einer sicherheitskritischen Situation kommen kann. Es hat sich aber gezeigt, daß das bekannte Steuerungssystem den Einschlagwinkel der Hinterräder nicht schnell genug erfaßt.

Der Erfindung liegt die Aufgabe zugrunde den Einschlagwinkel der gelenkten Hinterräder schnell und fehlerfrei zu erfassen.

Diese Aufgabe wird erfindungsgemäß durch eine Schaltungsanordnung mit den Merkmalen des Patentanspruchs 1 gelöst.

Durch die Erfindung erhält man eine einfach aufgebaute und doch sicher funktionierende Schaltungsanordnung, die zudem kostengünstig ist.

Vorteilhafte Ausgestaltungen der Erfindung sind in den Unteransprüchen gekennzeichnet.

Zwei Ausführungsbeispiele der Erfindung sind in den Zeichnungen dargestellt und werden im folgenden näher beschrieben. Es zeigen:
- Figur 1: schematisch eine Vorrichtung zum Lenken von Hinterrädern eines Kraftfahrzeugs,
- Figur 2: ein Stellglied der Vorrichtung nach Figur 1,
- Figur 3: eine erfindungsgemäße Schaltungsanordnung zum Erfassen des Einschlagwinkels der gelenkten Hinterräder und
- Figur 4: eine weitere Schaltungsanordnung zum Erfassen des Einschlagwinkels

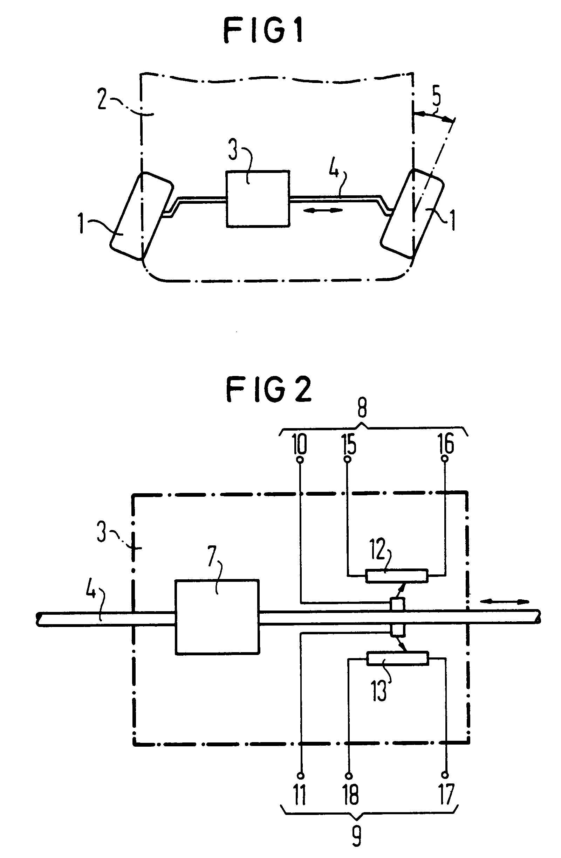

Die Hinterräder 1 (Figur 1) eines Kraftfahrzeugs 2 werden mit Hilfe eines Stellgliedes 3 und eines Stellkolbens 4 gelenkt. Der Stellkolben 4 ist mechanisch mit den Hinterrädern 1 gekoppelt. Wenn der Stellkolben 4 in Pfeilrichtung hin und her bewegt wird, werden die Hinterräder 1 um einen entsprechenden Winkel in bezug auf die Geradeausrichtung ausgelenkt. Dieser Winkel wird hier als Einschlagwinkel 5 bezeichnet.

Das Stellglied 3 (Figur 2) weist einen Antrieb 7 auf und zwei Potentiometer 8 und 9, die jeweils einen Einstellkontakt 10 bzw. 11, eine Widerstandsschicht 12 bzw. 13 und elektrische Anschlüsse 15 und 16 bzw. 17 und 18 haben. Der Stellkolben 4 wird durch den Antrieb 7 bewegt, der von einer in Figur 2 nicht dargestellten Steuereinheit angesteuert wird. Der Antrieb 7 des Stellkolbens 4 kann beispielsweise hydraulisch oder elektrisch erfolgen.

Die Einstellkontakte 10 und 11 sind an dem Stellkolben 4 befestigt. Beim Verschieben des Stellkolbens 4 bewegen sich die Einstellkontakte 10 und 11 über die Widerstandsschichten 12 bzw. 13, die sich in ihrer Lage gegenüber dem Stellkolben nicht bewegen. Die Einstellkontakte 10 und 11 greifen dabei eine Spannung ab, die dem zurückgelegten Verschiebeweg und damit einem Einschlagwinkel 5 der Hinterräder 1 entspricht.

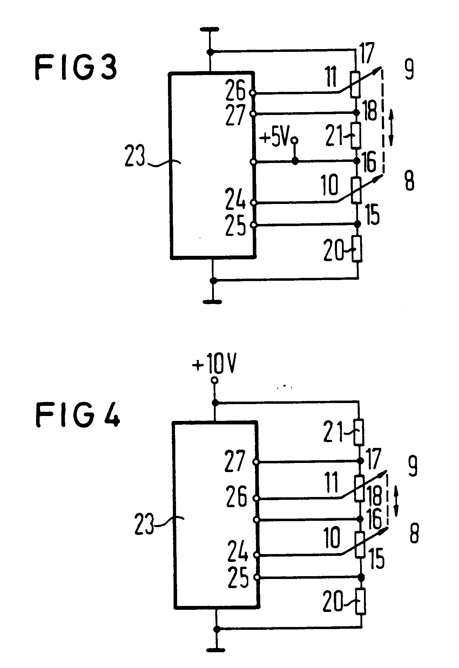

Eine Schaltungsanordnung (Figur 3) zum Erfassen des Einschlagwinkels 5 der Hinterräder 1 weist die zwei Potentiometer 8 und 9, zwei Widerstände 20 und 21 und eine Auswerteschaltung 23 mit den Eingängen 24, 25, 26 und 27 auf. Die Widerstände 20 und 21 und die Potentiometer 8 bzw. 9 liegen jeweils in Reihe zueinander.

Eine gestrichelte Linie in der Figur 3 stellt die mechanische Verbindung der beiden Einstellkontakte 10 und 11 durch den Stellkolben 4 dar, d.h. sie sind mechanisch miteinander starr gekoppelt.

Die von den Einstellkontakten 10 und 11 abgegriffene Spannung wird jeweils zu dem Eingang 24 bzw. 26 geführt. Allein aus diesen Spannungen könnte schon der Verschiebeweg des Stellkolbens 4 berechnet werden. Damit bei der Messung eventuell auftretende Fehler erkannt werden können, wird der Anschluß 15 mit dem Eingang 25 und der Anschluß 18 mit dem Eingang 27 verbunden und alle Eingangsspannungen der Eingänge 24, 25, 26 und 27 werden in der Auswerteschaltung 23 zum Bestimmen des Verschiebeweges und damit des Einschlagwinkels 5 verwendet.

Der Widerstand 20 liegt zwischen dem Potentiometer 8 und Masse und der Widerstand 21 zwischen dem Potentiometer 9 und +5V. Dadurch befinden sich die an den Einstellkontakten 10 und 11 abgegriffenen Spannungen auf unterschiedlichen Potentialen.

Aus den Eingangsspannungen an den Eingängen 24 und 25 wird in der Auswerteschaltung 23 ein erster Verschiebeweg und aus den Eingangsspannungen an den Eingängen 26 und 27 ein zweiter Verschiebeweg mit Hilfe einer Rechenvorschrift ermittelt.

Tritt kein Fehler bei der Messung der Verschiebung des Stellkolbens 4 auf, so sind die beiden berechneten Verschiebewege gleich groß. Wegen der Bauteiletoleranzen können die beiden Werte um einen Sollwert innerhalb einer Toleranzbreite schwanken.

Tritt allerdings bei der Messung in der Schaltungsanordnung ein Fehler auf, beispielsweise verursacht durch einen Kurzschluß zwischen dem Einstellkontakt 10 und dem Anschluß 15 oder durch eine Unterbrechung einer elektrischen Verbindung, so differieren die beiden berechneten Verschiebewege erheblich. Die Differenz wird von der Auswerteschaltung 23 sofort erkannt.

Falls sich die beiden berechneten Verschiebewege um mehr als die Toleranzbreite unterscheiden, so stellt die Steuereinheit die Hinterräder 1 in der momentanen Stellung fest, und es werden wie bei einem Fahrzeug mit reiner Vorderradlenkung nur noch die Vorderräder gelenkt.

Figur 4 zeigt ein weiteres Ausführungsbeispiel der Erfindung. Gleiche Teile wie in Figur 3 haben hier die gleichen Bezugszeichen. Die Reihenschaltung der Widerstände 20 und 21 mit den Potentiometern 8 und 9 ist auf der einen Seite an +10 V angeschlossen und auf der anderen Seite an Masse. Sind die Widerstandswerte der Potentiometer 8 und 9 sowie die Werte der Widerstände 20 und 21 gleich groß, so liegt die konstante Spannung von +5 V in der Mitte an. Am Einstellkontakt 10 und am Anschluß 15 kann eine Spannung kleiner als +5 V und am Einstellkontakt 11 bzw. Anschluß 17 eine Spannung größer als +5 V im fehlerfreien Falle abgegriffen werden.

Durch die unterschiedlichen Spannungsbereiche ist im Fehlerfalle eine einfachere Fehlerdiagnose möglich. Es kann dann genau gesagt werden, ob ein Fehler im Potentiometer 8 oder 9 aufgetreten ist. Dieses Ausführungsbeispiel kann eingesetzt werden, wenn als Versorgungsspannung für die Auswerteschaltung 23 eine Spannung größer als +5 V eingesetzt wird.

In beiden Ausführungsbeispielen sind die Werte der Widerstände 20 und 21 gleich groß und haben etwa 600 Ohm. Die Widerstandsschichten 12 und 13 sind ebenfalls gleich groß und haben einen Widerstandswert von etwa 2,5 kOhm. Als Auswerteschaltung 23 kann beispielsweise ein Mikroprozessor eingesetzt werden.

## Patentansprüche

1. Schaltungsanordnung zum Erfassen des Einschlagwinkels (5) von Hinterrädern (1) eines Kraftfahrzeugs (2), die mit Hilfe eines Antriebs (7) und eines Stellkolbens (4) gelenkt werden, mit einem ersten Potentiometer (8) zum Erfassen eines Verschiebeweges des Stellkolbens (4),
**dadurch gekennzeichnet,**
- daß sie ein zweites Potentiometer (9) aufweist, dessen Einstellkontakt (11) in Abhängigkeit des Radeinschlags bewegt wird,
- daß jeweils ein Widerstand (20, 21) in Reihe zu einem Potentiometer (8, 9) liegt, und
- daß die elektrischen Anschlüsse (15, 16, 17, 18) der beiden Potentiometer (8, 9) und deren Einstellkontakte (10, 11) mit einer Auswerteschaltung (23) verbunden sind, in der aus den Spannungen an den Anschlüssen (15, 16, 17, 18) und an den Einstellkontakten (10, 11) der Verschiebeweg, der dem Einschlagwinkel (5) entspricht, berechnet wird.

2. Schaltungsanordnung nach Anspruch 1, dadurch gekennzeichnet, daß die Einstellkontakte (10, 11) der Potentiometer (8, 9) mechanisch miteinander gekoppelt sind.

3. Schaltungsanordnung nach Anspruch 2, dadurch gekennzeichnet, daß in der Auswerteschaltung (23) aus den Spannungen an einem der Anschlüsse (15) und an einem der Einstellkontakte (10) ein erster Verschiebeweg und aus den Spannungen an einem anderen der Anschlüsse (18) sowie an einem anderen der Einstellkontakte (10) ein zweiter Verschiebeweg berechnet wird und daß durch Vergleich der zwei Verschiebewege ein Fehler innerhalb eines Meßvorgangs erkannt wird.

4. Schaltungsanordnung nach Anspruch 3, dadurch gekennzeichnet, daß die Einstellkontakte (10, 11) an dem Stellkolben (4) befestigt sind.

## Claims

1. Circuit arrangement for detecting the lock angle (5) of rear wheels (1) of a motor vehicle (2), which rear wheels (1) are steered with the aid of a drive (7) and of an actuating piston (4), having a first potentiometer (8) for detecting a displacement movement of the actuating piston (4), characterised in that
- said circuit arrangement has a second potentiometer (9) whose setting contact (11) is moved as a function of the wheel lock,
- in each case one resistor (20, 21) is connected in series with a potentiometer (8, 9), and
- the electrical connections (15, 16, 17, 18) of the two potentiometers (8, 9) and of their setting contacts (10, 11) are connected to an evaluation circuit (23) in which the displacement movement corresponding to the lock angle (5) is calculated from the voltages at the connections (15, 16, 17, 18) and at the setting contacts (10, 11).

2. Circuit arrangement according to Claim 1, characterised in that the setting contacts (10, 11) of the potentiometers (8, 9) are mechanically coupled to one another.

3. Circuit arrangement according to Claim 2, characterised in that, in the evaluation circuit (23), a first displacement movement is calculated from the voltages at one of the connections (15) and at one of the setting contacts (10), and a second displacement movement is calculated from the voltages at another of the connections (18) and at another of the setting contacts (10), and in that an error is identified within a measurement process by comparison of the two displacement movements.

4. Circuit arrangement according to Claim 3, characterised in that the setting contacts (10, 11) are mounted on the actuating piston (4).

## Revendications

1. Montage pour détecter l'angle de braquage (5) de roues arrière (1) d'un véhicule automobile (2), qui sont orientées au moyen d'un dispositif d'entraînement (7) et d'un piston de réglage (4), et comportant un premier potentiomètre (8) servant à détecter le mouvement de translation du piston de réglage (4),
caractérisé par le fait
- qu'il comporte un second potentiomètre (9), dont le contact de réglage (11) est déplacé en fonction de l'angle de braquage de la roue,
- que respectivement une résistance (20,21) est branchée en série avec un potentiomètre (8,9), et
- que les bornes électriques (15,16,17,18) des deux potentiomètres (8,9) et leurs contacts de réglage (10,11) sont raccordés à un circuit d'exploitation (23), dans lequel la course de translation, qui correspond à l'angle de braquage (5), est calculée à partir des tensions présentes sur les bornes (15,16,17,18) et sur les contacts de réglage (10,11).

2. Montage suivant la revendication 1, caractérisé par le fait que les contacts de réglage (10,11) des potentiomètres (8,9) sont couplés mécaniquement entre eux.

3. Montage suivant la revendication 2, caractérisé par le fait que dans le circuit d'exploitation (23), une première course de translation est calculée à partir des tensions présentes sur l'une des bornes (15) et sur l'un des contacts de réglage (10), et une seconde course de translation est calculée à partir des tensions présentes sur une autre des bornes (18) ainsi que sur l'autre des contacts de réglage (10), et qu'une erreur au cours d'un processus de mesure est identifiée par comparaison des deux courses de translation.

4. Montage suivant la revendication 3, caractérisé par le fait que les contacts de réglage (10,11) sont fixés sur le piston de réglage (4).
